# EUROPÄISCHE PATENTANMELDUNG

(11) **EP 0 712 874 A1**
(43) Veröffentlichungstag der Anmeldung: **22.05.1996**
(21) Anmeldenummer: 95115182.8
(22) Anmeldetag: 27.09.1995
(51) Int. Cl.: C08F 222/06, C08F 212/08, D21H 17/00

(54) **Verfahren zur Herstellung eines Leimungsmittelvorproduktes**

(30) Priorität: 21.11.1994 DE 4441304
(71) Anmelder: LEUNA-WERKE GMBH, D-06236 Leuna (DE)
(72) Erfinder: Gaikowski, Manfred, Dr., D-06618 Naumburg (DE); Wendt, Hans-Dietrich, D-06193 Gutenberg (DE)
(74) Vertreter: Schinke, Herbert, Dr. Dr., Patentanwaltskanzlei

(57) **Zusammenfassung**

2.1. Zu entwickeln war ein Verfahren mit einfacher Prozeßführung und geringem apparativem Aufwand zur Herstellung eines MSA/Styren-Copolymeren mit erhöhtem Styrengehalt in Pulverform, das aufgrund seines Hydrophilie/Hydrophobie-Verhältnisses als Leimungsmittelvorprodukt eingesetzt werden kann.

2.2. Bei einer radikalischen Blockcopolymerisation in einem niedrig siedenden aldehydischen oder ketonischen Lösungsmittel werden in einem Reaktor 1,5 Masseteile Styren in 5 Masseteilen des Lösungsmittels vorgelegt und auf eine Reaktionstemperatur von 80 bis 120 °C gebracht und gleichzeitig mit einer 1. Dosiervorrichtung innerhalb 60 bis 120 Minuten 14,5 Masseteile Styren und mit einer 2. Dosiervorrichtung innerhalb 150 bis 240 Minuten ein Gemisch aus 4 bis 10 Masseteilen MSA und 0,5 bis 1 Masseteil eines in Radikale zerfallenden Initiators im o.g. Lösungsmittel gelöst unter Rühren zudosiert, die anfallende Polymerlösung wird auf einen Zweiwalzentrockner geleitet, bei einer Walzentemperatur von 80 bis 150 °C das Lösungsmittel abgetrennt und der sich auf den Walzen bildende Polymerbelag in Form eines feinen Pulvers abgestreift.

2.3. Leimung von Papier und Karton.

## Beschreibung

Die Erfindung betrifft ein verfahren zur Herstellung eines Leimungsmittelvorproduktes zur Oberflächenleimung von Papier und Karton auf der Basis von Maleinsäureanhydrid/Styren-Copolymeren.

Es ist bekannt, daß Alkali- oder Ammoniumsalze von MSA/Styren-Copolymeren als Oberflächenleimungsmittel für Papier und Karton eingesetzt werden (DE 2040692).
Bekannt ist auch, daß die Leimqualität vom Verhältnis der hydrophilen zu den hydrophoben Anteilen im Polymeren abhängt. Gute Leimungsmittel enthalten etwa 20 bis 30 % hydrophile und 80 bis 70 % hydrophobe Anteile. Unmodifizierte alternierend aufgebaute MSA/Styren-Copolymere haben aufgrund ihres hydrophilen Charakters eine schlechte Leimwirkung. Durch partielle Amidierung oder Imidisierung kann die Hydrophilie verringert und damit die Leimwirkung verbessert werden.

Nachteilig ist, daß bei dieser Technologie ein zusätzlicher Reaktionsschritt erforderlich ist. Wirtschaftlicher ist ein Verfahren, bei dem das Hydrophilie/Hydrophobie-Verhältnis bereits bei der Polymerisation eingestellt wird.
Dies kann erreicht werden durch einen erhöhten Styreneinbau in das MSA/Styren-Copolymere. Bekannt ist, daß MSA und Styren eine ausgeprägte Tendenz zur alternierenden Copolymerisation aufweisen, so daß Copolymere mit erhöhtem Styrengehalt schwer zugänglich sind. In einigen Patenten wird die Herstellung von MSA/Styren-Copolymeren als Thermoplast mit erhöhtem Styrengehalt beschrieben (DE 2513253, DE 2724360, DE 3026831, DE 3140565). Die Polymerisation erfolgt kontinuierlich nach einem Masseverfahren, wobei häufig in überschüssigem Monomeren und bei hohen Temperaturen polymerisiert wird. Bei diesen Copolymeren handelt es sich um statistisch aufgebaute Copolymerisate. Nachteilig bei den Masseverfahren ist der hohe apparative Aufwand. In der Regel wird in einer Kombination aus einem Rührreaktor und einer Knet- oder Extrudereinrichtung polymerisiert. Neben der Beherrschung der hohen Viskositäten bereitet auch die Abführung der Reaktionswärme bei größeren Durchsätzen Probleme. In der Regel werden die nach dem Masseverfahren hergestellten Copolymerisate als Thermoplast oder zur Verbesserung der Wärmeformbeständigkeit von anderen Polymeren wie z.B. Polystyren verwendet.
In DE 3703551 werden speziell die aus den Masseverfahren anfallenden statistisch aufgebauten MSA/Styren-Copolymerisate mit einem MSA-Gehalt von 40 bis 20 Masse-% und Molekulargewichten von etwa 10.000 bis 200.000 in Form ihrer Ammoniumsalze als gute Oberflächenleimungsmittel für kreidehaltige Papiere beschrieben. Ein analoges Leimungsmittel mit einem Molekulargewicht unter 10.000 wird auf dem Markt unter der Bezeichnung SMA-Resin angeboten. Ein Verfahren zur Herstellung dieser niedermolekularen MSA/Styren-Copolymere wird in DE 1520774 als kontinuierliches Lösungsverfahren beschrieben. Bei diesem Verfahren wird ein Monomergemisch bei Temperaturen von etwa 140 °C zusammen mit einem Initiator dosiert. Als untere Grenze der Polymerisationstemperatur wird 120 °C angegeben. Unterhalb dieser Temperatur werden alternierend aufgebaute Copolymere erhalten.
Nachteilig bei diesem Verfahren ist die hohe Polymerisationstemperatur, die mit hohen Reaktionsdrücken verbunden ist, so daß die Reaktoren als Druckgefäße ausgelegt sein müssen oder ein hochsiedendes Lösungsmittel verwendet werden muß, das dann einen erhöhten Aufwand in der Polymerisolierung bereitet.

Bekannt ist auch, daß Leimungsmittel in wäßriger Form mit 10 bis 25 % Feststoffanteil gehandelt werden. Speziell bei großen Entfernungen zwischen Produzent und Anwender treten durch den hohen Wasseranteil erhöhte Transportkosten auf. Vorteilhaft sind daher sogenannte Leimungsmittelvorprodukte, die in Form von Pulver angeliefert und erst beim Verbrauch durch Lösen in Ammoniakwasser in die wäßrige Form überführt werden. Die Pulverherstellung kann durch Abfiltrieren von Suspensionspolymerisaten erfolgen. Nachteilig ist, daß das Restlösungsmittel durch Auswaschen und/oder Trocknen entfernt werden muß, was mit einem hohen apparativen Aufwand verbunden ist.
Eine andere Variante ist, daß man ein Massepolymerisat durch Mahlen pulverisiert. In der DE 2300093 wird ein Suspensionsverfahren in Octan, Nonan, Toluol oder Cyclohexanon beschrieben, bei dem sofort Pulver anfällt. Wesentlicher Bestandteil dieses Verfahrens ist, daß man durch ein geeignetes mechanisches Rührsystem die Oberfläche um mindestens das 20-fache erhöht und die Hilfsflüssigkeit unter Rühren abdestilliert, nachdem die Mischung eine Viskosität von 20.000 cP erreicht hat. Auf diese Weise erhält man ein pulverförmiges Copolymerisat. Nachteil ist hier der hohe apparative Aufwand.

Somit bestand die Aufgabe der Entwicklung eines Verfahrens zur Herstellung eines MSA/Styren-Copolymeren mit erhöhtem Styrengehalt in Pulverform, das aufgrund seines Hydrophilie/Hydrophobie-Verhältnisses als Leimungsmittelvorprodukt für Papier und Karton eingesetzt werden kann. Das Verfahren soll sich durch eine einfache Prozeßführung und einen geringen apparativen Aufwand auszeichnen.

Die Aufgabe wird durch eine radikalische Blockcopolymerisation in einem niedrigsiedenden aldehydischen oder ketonischen Lösungsmittel gelöst, indem erfindungsgemäß in einem Reaktor 1,5 Masseteile Styren in 5 Masseteilen des Lösungsmittels vorgelegt und auf eine Reaktionstemperatur von 80 bis 120 °C, vorzugsweise 90 bis 100 °C, gebracht werden und gleichzeitig mit einer ersten Dosiervorrichtung innerhalb 60 bis 120 Minuten 14,5 Masseteile Styren und mit einer zweiten Dosiervorrichtung innerhalb 150 bis 240 Minuten ein Gemisch aus 4 bis 10 Masseteilen MSA und 0,5 bis 1 Masseteil eines in Radikale zerfallenden Initiators im o.g. Lösungsmittel gelöst unter Rühren zudosiert werden, die anfallende Polymerlösung auf einen Zweiwalzentrockner geleitet, bei einer Walzentemperatur von 80 bis 150 °C das Lösungsmittel abgetrennt und der sich auf den Walzen bildende Polymerbelag in Form eines feinen Pulvers abgestreift wird.
Als Lösungsmittel werden bevorzugt Aceton oder Methylethylketon eingesetzt.
Als Initiator werden vorteilhaft Peroxide eingesetzt, die unter Polymerisationsbedingungen eine Halbwertszeit von 0,1 bis 3 h haben.

Es werden Copolymerisate mit einem Molekulargewichtsbereich von 10.000 bis 100.000 erhalten und vorteilhaft mit einem M_{w} von 25.000 bis 50.000 für die Anwendung als Leimungsmittel eingesetzt.

Die nach dem erfindungsgemäßen Verfahren anfallenden Copolymerisate stellen Polymergemische dar, die sowohl alternierend als auch blockartig aufgebaute Anteile in etwa im Verhältnis 15 : 85 enthalten.

Diese Gemische setzen sich etwa wie folgt zusammen:
5 bis 10 Masse-% MSA/Styren-Copolymere mit einem Molverhältnis von 1:4 bis 5
10 bis 20 Masse-% MSA/Styren-Copolymere mit einem Molverhältnis von 1:3 bis 4
25 bis 45 Masse-% MSA/Styren-Copolymere mit einem Molverhältnis von 1:2 bis 3
60 bis 25 Masse-% MSA/Styren-Copolymere mit einem Molverhältnis von 1:1 bis 2
Von den statistisch aufgebauten Copolymerisaten, wie sie nach dem kontinuierlichen Masseverfahren anfallen und in gewisser Weise dabei weitestgehend einheitlich aufgebaut sind, unterscheiden sie sich durch ihre größere Schwankungsbreite in den Styrensequenzen und damit in der Zusammensetzung der Hydrophobie/Hydrodphilie-Anteile im Leimungsmittel. Entscheidend ist, daß keine alkaliunlöslichen Homo- oder Blockpolymere entstehen und als Summe das Verhältnis von hydrophilen zu hydrophoben Anteilen von 1 : 2 bis 3 erreicht wird. Die stark hydrophoben Anteile, die für sich allein ausfallen würden, werden durch die stärkeren hydrophilen Anteile in Lösung gehalten und verleihen der Gesamtlösung eine relativ niedrige Viskosität.
Speziell bei der Papierleimung wirkt sich dieser Effekt positiv aus, da sich die hydrophoberen Anteile vorrangig auf der Papieroberfläche abscheiden und damit zu einer verstärkten Sandwichleimung beitragen.

Die nach dem erfindungsgemäßen Verfahren anfallenden Copolymerisate können in Form ihrer wäßrigen Ammoniumsalze sowohl für die Oberflächenleimung von sauren als auch von neutralen Papieren eingesetzt werden. Neben dem Einsatz als Leimungsmittel können diese Produkte aber auch als Zusatz zu Lederformulierungsmitteln, als Polishzusatz, als Verdickungsmittel u.a.m. eingesetzt werden.

Überraschend wurde gefunden, daß sich die nach dem erfindungsgemäßen Verfahren als Zwischenstufe anfallende Polymerlösung beim Erhitzen auf 80 bis 120 °C unter Ausgasung des Lösungsmittels voluminös zu einem harten Schaum aufbläht, der mit geringem mechanischen Aufwand in Pulver zerfällt. Im Gegensatz hierzu bildet sich unter gleichen Bedingungen bei einem rein alternierend copolymerisiertem MSA/Styren-Copolymeren ein Polymerfilm, der nicht in Pulver zerfällt. Die Vorteile des erfindungsgemäßen Verfahrens sind:
- daß man die Polymerisation in einem handelsüblichen Rührwerk durchführen kann,
- daß die anfallende Polymerlösung mit einer Konzentration von 50 bis 70 % Polymergehalt herstellbar ist,
- daß man auf eine einfache Art und Weise zu pulverförmigen Copolymerisaten kommt, die in wäßrigen Alkalien und Ammoniak löslich sind,
- daß die pulverförmigen Leimungsmittelvorprodukte sofort nach dem Lösen in wäßrigem Ammoniak als Leimungsmittel für Papier und Karton eingesetzt werden können.

### Ausführungsbeispiele

### Beispiel 1

In einem 7 l Reaktionsgefäß mit doppelter Dosiervorrichtung und Kühlsystem werden 750 g Aceton und 225 g Styren vorgelegt und auf 90 °C erhitzt. Bei 90 °C werden über die 1. Dosiereinrichtung innerhalb 90 Minuten 2025 g Styren und gleichzeitig innerhalb 180 Minuten über die 2. Dosiervorrichtung ein Gemisch aus 890 g MSA, 120 g tert-Butylperoxy-2 ethylhexanoat und 1750 g Aceton unter Rühren zudosiert. Die Temperatur wird dabei auf 90 °C gehalten. Nach beendeter Dosierung wird noch 1 Stunde bei 90 °C gerührt und die so erhaltene Polymerlösung auf einen Labor-Zweiwalzentrockner (der Firma Vakuumtechnik Sangerhausen) geleitet.

Die Parameter des Trockners sind:

| | |
|---|---|
| Walzentemperatur | 110 - 115 °C |
| Vakuum | 39,9 - 53,2 kPa |
| Spaltbreite | 1 mm |
| Dosiergeschwindigkeit | 8 l/h |

Das anfallende Polymerpulver ist gut rieselfähig und enthält 5 bis 8 Masse-% Restaceton und etwa 0,2 Masse-% Reststyren. Nach dem Trocknen im Vakuumtrockenschrank bei 100 °C und 1,33 kPa wurde ein Pulver mit folgenden Kennwerten erhalten:

| | |
|---|---|
| Restacetongehalt | 0,5 Masse-% |
| Reststyrengehalt | 0,05 Masse-% |
| Schüttgewicht | 0,45 g/cm³ |
| M_{w} | 32 000 |
| Durchschnittliches Molverhälnis MSA/Styren | 1 : 2,5 |

### Beispiel 2

In einem 7 l Rührwerk mit doppelter Dosiervorrichtung und Kühlsystem werden 450 ml Aceton und 150 g Styren vorgelegt und auf 90 °C erhitzt.
Bei 90 °C werden über die 1. Dosiervorrichtung 1537 g Styren innerhalb 120 min und über die 2. Dosiervorrichtung innerhalb von 180 min ein Gemisch aus 1050 g MSA, 90 g tert-Butylperoxy-2 ethylhexanoat und 2500 g Aceton unter Rühren zudosiert. Die Temperatur wird während der Polymerisation auf 90 bis 95 °C gehalten.

Nach beender Dosierung wird noch 1 h bei 90 °C gerührt und danach die acetonische Polymerlösung unter gleichen Bedingungen wie im Beispiel 1 über einen Zweiwalzentrockner geleitet und im Vakuumtrockenschrank nachgetrocknet.

Es werden folgende Kennwerte für das Pulver erhalten:

| | |
|---|---|
| Restacetongehalt | 1 Masse-% |
| Reststyrengehalt | 0,05 Masse-% |
| Schüttgewicht | 0,48 g/cm³ |
| M_{w} | 36 000 |
| Durchschnittliches Molverhältnis MSA/Styren | 1 : 1,5 |

### Beispiel 3

In einem 7 l Reaktionsgefäß mit doppelter Dosiervorrichtung und Kühlsystem werden 750 g Aceton und 225 g Styren vorgelegt und auf 90 °C erhitzt. Bei 90 °C werden über die 1. Dosiervorrichtung innerhalb 90 Minuten 2025 g Styren und gleichzeitig innerhalb 210 Minuten ein Gemisch aus 3000 ml Aceton, 600 g MSA und 120 g tert-Butylperoxy-2 ethylhexanoat unter Rühren zudosiert. Nach beendeter Dosierung wird noch 1 Stunde bei 90 °C gerührt und die so erhaltene Polymerlösung wie im Beispiel 1 über einen Zweiwalzentrockner geleitet und im Vakuumtrockenschrank nachgetrocknet.

Kennwerte des Pulvers:

| | |
|---|---|
| Restacetongehalt | 0,3 Masse-% |
| Reststyrengehalt | 0,2 Masse-% |
| Schüttgewicht | 0,48 g/cm³ |
| M_{w} | 28 000 |
| Durchschnittliches Molverhältnis MSA/Styren | 1 : 3,5 |

### Vergleichsbeispiel 1

In einem 7 l Rührwerk mit Dosiervorrichtung und Kühlsystem werden 1040 g Styren und 980 g MSA sowie 800 g Aceton vorgelegt und auf 90 ° C erhitzt. Bei 90 ° C wird innerhalb von 180 Minuten ein Gemisch aus 50 g tert-Butylperoxy-2 ethylhexanoat in 250 g Aceton zudosiert. Die Temperatur wird dabei auf 90 °C gehalten. Die erhaltene acetonische Polymerlösung wird wie unter Beispiel 1 auf dem Zweiwalzentrockner aufgearbeitet. Man erhält statt des Polymerpulvers eine Polymerfolie, die sich sehr schwer durch Mahlen zerkleinern läßt.

Es werden folgende Kennwerte erhalten:

| | |
|---|---|
| Restacetongehalt | 1 Masse-% |
| Reststyrengehalt | 0,05 Masse-% |
| Schüttgewicht (gemahlen) | 0,21 g/cm³ |
| M_{w} | 45 000 |
| Molverhältnis MSA/Styren | 1 : 1 |

### Vergleichsbeispiel 2

Es wurde ein Polymerisat entsprechend DE 1520774 hergestellt.

| | |
|---|---|
| Restacetongehalt | 0,2 Masse-% |
| Reststyrengehalt | 0,6 Masse-% |
| M_{w} | 6 800 |
| Durchschnittliches Molverhältnis MSA/Styren | 1 : 2,88 |

### Bereitung des Leimes

In einem Rührwerk werden 820 ml Wasser und 50 ml NH₄OH (25%ig) vorgelegt und auf 60 °C erwärmt. Unter Rühren werden 130 g des Polymerpulvers zudosiert und solange gerührt, bis sich das Polymere gelöst hat.

### Leimungsausprüfung

- Testpapier:: Kreidegefülltes Diagrammrohpapier mit einer Flächenmasse von 80 g/m²

Die Leimungsunterschiede wurden an Hand des Cobb-60 Wertes in Anlehnung an DIN 53132 ermittelt. Die Leimflotte wurde mit einer 5%igen verkleisterten Kartoffelstärke bereitet.

| Beispiel | Cobb-60-Wert | | | |
|---|---|---|---|---|
| | 0,4^{x} | 0,2^{x} | 0,1^{x} | 0,05^{x} |
| 1 | 18,1 | 18,3 | 18,5 | 22,5 |
| 2 | 22 | 23,5 | 47,0 | 62,1 |
| 3 | 18,0 | 18,1 | 18,2 | 20,1 |
| Vergleichsbeispiel 1 | 60 | DS | DS | DS |
| Vergleichsbeispiel 2 | 19,5 | 19,5 | 22,5 | 38 |

| | | | | |
|---|---|---|---|---|
| ^{x} Wirkstoffgehalt in der Leimflotte | | | | |
| DS Durchschlag | | | | |

## Patentansprüche

1. Verfahren zur Herstellung eines Leimungsmittelvorproduktes für Papier und Karton auf der Basis von MSA/Styren-Copolymeren durch eine radikalische Blockcopolymerisation in einem niedrig siedenden aldehydischen oder ketonischen Lösungsmittel, dadurch gekennzeichnet, daß in einem Reaktor 1,5 Masseteile Styren in 5 Masseteilen des Lösungsmittels vorgelegt und auf eine Reaktionstemperatur von 80 bis 120 °C gebracht werden und gleichzeitig mit einer ersten Dosiervorrichtung innerhalb 60 bis 120 Minuten 14,5 Masseteile Styren und mit einer zweiten Dosiervorrichtung innerhalb 150 bis 240 Minuten ein Gemisch aus 4 bis 10 Masseteilen MSA und 0,5 bis 1 Masseteil eines in Radikale zerfallenden Initiators im o.g. Lösungsmittel gelöst unter Rühren zudosiert werden, die anfallende Polymerlösung auf einen Zweiwalzentrockner geleitet, bei einer Walzentemperatur von 80 bis 150 °C das Lösungsmittel abgetrennt und der sich auf den Walzen bildende Polymerbelag in Form eines feinen Pulvers abgestreift wird.

2. Verfahren nach Anspruch 1, dadurch gekennzeichnet, daß als Lösungsmittel Aceton oder Methylethylketon eingesetzt werden.

3. Verfahren nach Anspruch 1 und 2, dadurch gekennzeichnet, daß bei einer Reaktionstemperatur von 90 bis 100 °C gearbeitet wird.

4. Verfahren nach Anspruch 1 bis 3, dadurch gekennzeichnet, daß als Initiator Peroxide eingesetzt werden, die unter Polymerisationsbedingungen eine Halbwertszeit von 0,1 bis 3 h haben.
